# EUROPEAN PATENT SPECIFICATION

(11) **EP 4 339 038 B1**
(45) Date of publication and mention of the grant of the patent: **05.11.2025**
(21) Application number: 22195958.8
(22) Date of filing: 15.09.2022
(51) Int. Cl.: B60R 21/013, B60R 21/015, B60R 21/00, B60R 21/01, B60R 21/0132

(54) **METHOD FOR CONTROLLING AIRBAG ACTIVATION DEVICE AND AIRBAG ACTIVATION DEVICE**
VERFAHREN ZUR STEUERUNG EINER AIRBAGAKTIVIERUNGSVORRICHTUNG UND AIRBAGAKTIVIERUNGSVORRICHTUNG
PROCÉDÉ DE COMMANDE DE DISPOSITIF D'ACTIVATION DE COUSSIN DE SÉCURITÉ GONFLABLE ET DISPOSITIF D'ACTIVATION DE COUSSIN DE SÉCURITÉ GONFLABLE

(43) Date of publication of application: 20.03.2024
(73) Proprietor: Volvo Car Corporation, 405 31 Göteborg (SE)
(72) Inventor: BJÖRKLUND, Magnus, 40531 Göteborg (SE); GRÖNDAHL, Emil, 40531 Göteborg (SE); NILSSON, Pär, 40531 Göteborg (SE)
(74) Representative: Maiwald GmbH

(56) References cited:
- DE-B4- 102019 209 974
- JP-A- 2001 247 009
- US-A1- 2005 046 584
- US-A1- 2010 228 445
- US-A1- 2011 295 467

## Description

### TECHNICAL FIELD

The present disclosure relates to method for controlling an airbag activation device and to an airbag activation device.

### BACKGROUND ART

Airbag activation devices for vehicles and methods for controlling them are generally known and used to reduce or prevent a risk of injury to the passenger(s) in case of a crash of the vehicle, particularly by reducing or preventing an impact with the interior of the vehicle. Usually, the known methods for controlling an airbag activation device are based on properly positioned passengers. In cases, the passengers are not properly positioned, e.g., due to a previous crash, the effect of reducing or preventing an impact with the interior can be decreased, thereby increasing the risk of injury to the passengers. US 2010/228445 A1 discloses an activation device for occupant protection apparatus and method for activating the occupant protection apparatus. The activation device includes a front collision detection unit and a rear collision detection unit. The front collision detection unit outputs a front-collision-state activation signal to a front-collision protection apparatus so as to activate the front-collision protection apparatus when detecting front collision of the vehicle. The rear collision detection unit outputs a rear-collision-state activation signal to a rear-collision protection apparatus so as to activate the rear-collision protection apparatus when detecting rear collision of the vehicle. The rear collision detection unit prohibits output of the rear-collision-state activation signal to the rear-collision protection apparatus for a first period when the front collision detection unit detects front collision of the vehicle.

### SUMMARY

There may, therefore, be a need to provide an improved method for controlling an airbag activation device and an improved airbag activation device, particularly a method for controlling an airbag activation device, which allows reducing the risk of injury to the passengers independent from the position of the passengers in case of a crash of the vehicle, and an airbag activation device. In particular, the method for controlling an airbag activation device allows reducing or prevent the risk of injury to the passenger in case of consecutive accidents.

The object of the present disclosure is at least partially solved or alleviated solved by the subject-matter of the appended independent claims, wherein further examples are incorporated in the dependent claims.

According to a first aspect, there is provided a method for controlling an airbag activation device in a vehicle. The method comprises the following steps, but not necessarily in this order:
detecting, by a rear collision sensing unit, a rear collision;
transmitting, from the rear collision sensing unit, a signal indicating the rear collision to a control unit,
detecting, by a front collision sensing unit, a front collision;
transmitting, from the front collision sensing unit, a signal indicating the front collision to the control unit;
adapting, by the control unit, based on the signals received from the rear collision sensing unit and the front collision sensing unit, a threshold for activating an airbag deployment according to at least one activation parameter, particularly in case that, after the rear collision, a front collision is detected by the front collision sensing unit, and/or
activating, by the control unit, a delay timer being configured to activate an airbag deployment after a predetermined amount of time after the rear collision.

The method may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

The method for controlling an airbag activation device is configured to control at least one of frontal airbags, side airbags, far side airbags, and so-called curtain airbags. Consequently, the airbag activation device is configured to activate at least one of front airbags, side airbags, and so-called curtain airbags.

The term "rear collision" relates to an actual rear collision as well as to an upcoming, particularly unavoidable, rear collision event. Further, the term "rear collision" comprises all types of rear collision, such as a straight rear collision, which typically occur, when various vehicles are driving in line, e.g., in cities, in traffic jams etc., as well as an angled rear collision defining a rear collision, by which the vehicle is hit from behind at an oblique angle, particularly at an angle larger than 0° and smaller than 90° in relation to a longitudinal axis of the hit vehicle.

The term "front collision" relates to an actual front collision as well as to an upcoming, particularly unavoidable, front collision event. Further, the term "front collision" comprises all types of front collision, such as a straight front collision, which typically occur, when various vehicles are driving in line, e.g., in cities, in traffic jams etc., as well as an angled front collision defining a front collision, by which the vehicle is hit in front at an oblique angle, particularly at an angle larger than 0° and smaller than 90° in relation to a longitudinal axis of the hit vehicle. In other words, the term "front collision" includes collisions, by which the vehicle hits or is hit in front at an angle substantially between -90° to +90° relative to its longitudinal axis, wherein a hit at an angle of around 0° corresponds to a straight collision.

The threshold for activating an airbag deployment is typically pre-set to a value corresponding to situations in classic crash events, such as an isolated/single rear collision and/or an isolated/single front collision etc., that require an airbag deployment to reduce and/or prevent a risk of injury to the occupant(s). The term "activation parameter" is used to describe any type of value and/or event that can be used to estimate consequences of the rear collision and/or the front collision for the occupant(s), and particularly of a rear collision being followed by a front collision. Such consecutive crashes of one vehicle are herein referred to as "queue collisions".

Thus, the method allows adapting the threshold for activating an airbag deployment according to an actual crash event, thereby reducing the risk of injury to the occupant(s) in case of a crash. In particular, the method allows setting the threshold for activating the airbag deployment for each crash-event individually, e.g., by taking into account the type, severity, and/or number of crash and/or the occupant's position and/or size. Such adaptation improves the protection of the occupant(s), particularly for "queue collisions".

For example, when a first vehicle gets hit by a second car driving behind the first vehicle (rear collision of the first vehicle), the first vehicle can hit a third vehicle driving in front of the first vehicle (front collision of the first vehicle) due to the forces acting on the first vehicle being hit by the second vehicle. During the rear collision of the first vehicle, the occupant moves rearward due to the forces acting on the occupant during the rear collision being followed by a rebound of the occupant. During the front crash, the occupant moves forward due to the forces acting in the occupant during the front collision. Compared to only a front crash event, the occupant's forward movement is accelerated by the rebound resulting in a higher impact risk and/or a higher risk for a more severe impact for the occupant. Additionally, before the front crash event happens, the occupant is not in the classic prefrontal-crash position, but in a rearward offset position.

Consequently, a pre-crash position of the occupant and/or a movement of the occupant during the crash may vary. In detail, a pre-crash position of the occupant and/or a movement, particularly a speed of such movement, for a front collision without a previous rear collision may be different from a pre-crash position of the occupant and/or a movement, particularly a speed of such movement, for a front collision with a previous rear collision. Therefore, for protecting the occupant during and/or after a front collision occurring at a certain speed of the vehicle after a previous rear collision other actions, e.g., deploying an airbag, may be necessary than in case of a front collision occurring at the same speed of the vehicle but without a previous rear collision. The method for controlling the airbag activation device allows adapting the threshold for activating an airbag deployment individually for each crash situation, particularly taking into account if the crash situation is a single front or rear collision or a queue collision. In other words, the method allows activating an airbag deployment in a situation in which an airbag activation device developed for normally seated occupants and/or standard crash events, particularly isolated/single crash events, would not activate the airbag deployment Thereby, the risk of an excessive, and potentially harmful, impact for the occupant, particularly onto the interior of a passenger compartment, is reduced or even prevented.

According to an example, the method may further comprise the step of deactivating, by the control unit, based on the signals received from the rear collision sensing unit and/or the front collision sensing unit, a knee airbag activation, thereby preventing a knee airbag deployment.

The rear collision may change the position of the occupant such that a position of the occupant's legs may be unpredictable at the time for the knee airbag deployment in the following front crash.

According to an example, the at least one activation parameter may be a value corresponding to a severity of the rear collision.

The more severe the rear collision, that means, the more severe the impact of the rear collision, the stronger the forces acting on the occupant, resulting in a larger rearward movement and/or a stronger rebound of the occupant. Consequently, a forward movement of the occupant due to the frontal collision may be faster the more severe the rear collision is. Thus, the more severe the rear collision, the earlier the airbag needs to be activated to provide a sufficient protection for the occupant for reducing the impact of the occupant on the interior or even for preventing such impact.

According to an example, the at least one activation parameter may be related to a size and/or pre-collision position of the occupant.

According to an example, the size and/or the pre-collision position of the occupant may be detected from at least one interior sensor, and/or from seat sensors.

The at least one interior sensor may be a sensor for monitoring at least a driver of the vehicle and/or the passenger compartment, such as a camera, a radar sensor, or the like. The seat sensors may comprise pressure sensors and/or capacitive sensors located in the seat of the occupant, as well as sensors related to the seat belt, such as a bobbin rotation sensor, contact sensors, and the like. The size and/or the pre-collision position, particularly before the front collision and after the rear collision, of the occupant may allow to estimate a movement of the occupant during the front crash, thereby allowing to estimate or determine if and when an airbag deployment may be needed and adapting the threshold for activating the airbag deployment accordingly.

According to an example, the at least one activation parameter may be based on a prediction model of the occupant's future position being calculated before and/or during and/or after the rear collision.

The prediction model may allow real time predictions of the occupant's movement, and may be performed by the control unit or, alternatively, may be performed separately, and the results may be transmitted to the control unit. A prediction based on a prediction model may be more accurate than estimating the position based on size and/or pre-crash position of the occupant. However, the size and/or pre-crash position of the occupant being detected by the at least one interior sensor and/or the seat sensors may be used as values for the prediction model.

According to an example, the at least one activation parameter may be based on a real time tracking of the occupant.

According to an example, the real time tracking of the occupant may be performed by at least one interior sensor.

Real time tracking of the occupant may allow knowing the substantially exact position of the occupant. This may allow determining the occupants' movement in case of crash more accurately. The at least one interior sensor may be a sensor for monitoring at least a driver of the vehicle and/or the passenger compartment, such as a camera, a radar sensor, or the like.

According to a second aspect, there is provided an airbag activation device for a vehicle. The airbag activation device comprises a rear collision sensing unit, a front collision sensing unit, and a control unit. The rear collision sensing unit is configured to detect a rear collision and to transmit a signal indicating the rear collision to the control unit. The front collision sensing unit is configured to detect a front collision and to transmit a signal indicating the front collision to the control unit. The control unit is configured to adapt a threshold for activating at least one airbag according to the at least one activation parameter based on the signals received from the rear collision sensing unit and the front collision sensing unit. Additionally, or alternatively, the control unit is configured to activate a delay timer, which is configured to activate an airbag deployment after a predetermined amount of time after the rear collision.

The airbag activation device is configured to activate at least one of frontal airbags, side airbags, far side airbags, and so-called curtain airbags. Further, the airbag activation device is controllable by the method according to the first aspect and therefore allows activating an airbag deployment in a situation in which an airbag activation device developed for normally seated occupants and/or standard crash events, particularly isolated/single crash events, would not activate the airbag deployment Thereby, the risk of an excessive, and potentially harmful, impact for the occupant, particularly onto the interior of a passenger compartment, is reduced or even prevented.

According to an example, the rear collision sensing unit may comprise at least one vehicle sensor being an on-board sensor or a satellite or external sensor.

According to an example, the front collision sensing unit may comprise at least one vehicle sensor being an on-board sensor of a satellite or external sensor.

On-board sensors may be located in the control unit and/or in the center of the vehicle and may be acceleration sensors, and the like. Satellite or external sensor may be located outside the control unit and/or off-center in the vehicle, e.g., in the bumper, b-pillar, c-pillar, and the like. Further, the satellite sensors may be acceleration sensors, deformation sensors, or the like.

In particular, a combination of both, on-board sensors and satellite sensors may provide a higher accuracy in determining a rear collision and/or a front collision, particularly a follow-up front collision, since satellite sensor may detect low and/or weak impacts resulting in a small deformation but almost no acceleration.

According to an example, the rear collision sensing unit may comprise multiple vehicle sensors and/or the front collision sensing unit may comprise multiple vehicle sensors.

Multiple sensors, particularly positioned at different locations in the vehicle, may allow improving the accuracy of detecting rear and/or front collisions, particularly regarding a direction of the collision (straight or oblique), and/or may allow improving the accuracy of predicting a forward movement of the occupant due to the frontal crash

According to an example, the vehicle sensor/s may be an acceleration sensor, an SRS (Supplemental Restraint System) sensor, a deformation sensor, etc.

Different types of sensors may provide different information regarding the crash, particularly the queue collision, which, in combination, may allow improving the detection accuracy and/or the prediction accuracy, thereby improving accuracy of adapting the threshold for activating an airbag deployment.

According to an example, the rear collision sensing unit may correspond at least partially to the front collision sensing unit. Thus, sensors used for detecting the rear collision and sensors used for detecting the front collision may be at least partially the same sensors.

According to an example, the control unit may be configured to determine the at least one activation parameter and/or activate the delay timer based on a severity of the rear collision and/or based on a size and/or pre-collision position of the occupant and/or based on a prediction model being calculated before and/or during and/or after the rear collision (resulting in a real time prediction of the occupant's movement), and/or based on a real time tracking of the occupant.

According to an example, the airbag activation device may further comprise at least one interior sensor being configured to monitor a passenger compartment in a vehicle, and/or seat sensors.

The seat sensors may be positioned inside an occupant's seat and/or seat belt and configured to detect the occupant, and particularly, a size and/or position of the occupant.

It should be noted that the above examples may be combined with each other irrespective of the aspect involved. Accordingly, the method may be combined with structural features and, likewise, the device may be combined with features described above with regard to the method.

These and other aspects of the present disclosure will become apparent from and elucidated with reference to the examples described hereinafter.

### BRIEF DESCRIPTION OF DRAWINGS

Examples according to the present disclosure will be described in the following with reference to the following drawings.
- Fig. 1: shows a schematic view of an exemplary queue collision situation.
- Fig. 2: shows schematic views of a driver in an exemplary normal seated position (a) and of the driver in an exemplary rebounded position after a rear collision (b).
- Fig. 3: shows a schematic and functional view of an exemplary airbag activation device.
- Fig. 4: shows a schematic view of an exemplary vehicle having an airbag activation device.
- Fig. 5: shows a schematic flow diagram of an exemplary method for controlling an airbag activation device.

The figures are merely schematic representations and serve only to illustrate examples of the disclosure. Identical or equivalent elements are in principle provided with the same reference signs.

### DESCRIPTION OF EXAMPLES

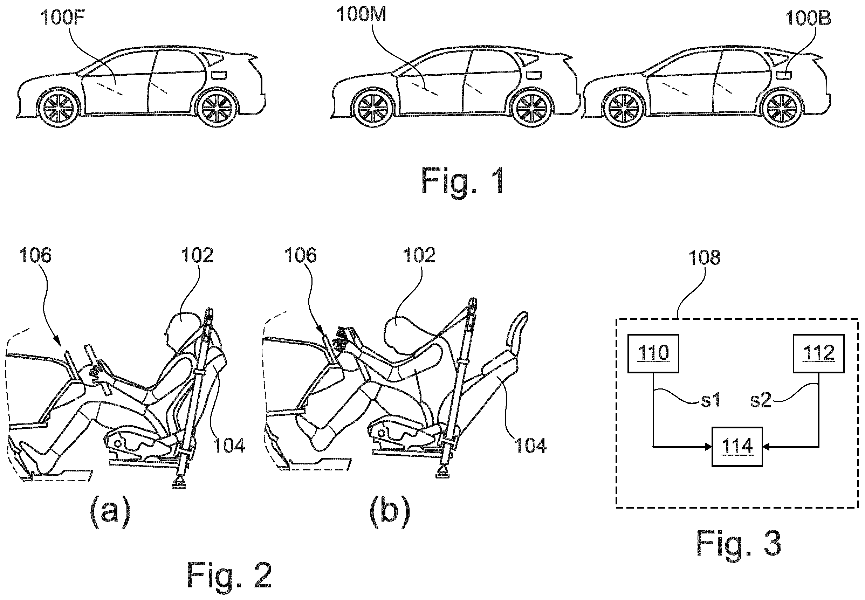

Figure 1 shows a schematic view of an example for a queue collision situation of a vehicle 100. Herein, a queue collision is used to describe consecutive collisions or crashes of one vehicle 100, particularly of a rear collision being followed by a front collision. In Figure 1, the middle vehicle 100M is first hit by the vehicle 100B driving behind the middle vehicle 100M from behind, which correspond to a rear collision of the middle vehicle 100M. Due to forces resulting from the rear collision acting on the middle vehicle 100M, the middle vehicle 100M may collide with the vehicle 100F driving in front of the middle vehicle 100M, which corresponds to a front collision of the middle vehicle 100M.

Before a first collision, in Figure 1 the rear collision of the middle vehicle 100M, happens, an occupant 102, particularly a driver, is seated in a normal, particularly standard, position (see Figure 2(a)), which, hereinafter, will be referred to as "pre-crash position". However, due to the impact of the rear collision, the occupant 102 will move rearwards towards and into a seat 104. Thus, compared to the pre-crash position (see Figure 2(a)), the occupant 102 will be out of position. Such rearward movement will cause a rebound of the occupant 102, the rebound being a forward movement of the occupant 102, by which the occupant 102 will move forward, particularly beyond the pre-crash position (see Figure 2(b)).

In case, the front collision happens while the occupant 102 rebounds, the forces acting on the occupant 102 resulting from the front collision, will increase or accelerate such forward movement, thereby increasing the risk that the occupant 102 will impact an interior 106 of the vehicle 100. In other words, a front collision occurring at a certain speed and/or certain angle can have different effects or consequences for the occupant 102 depending on whether or not the occupant 102 is in the pre-crash position (see Figure 2(a)) when the front crash happens, or, in other words, depending on whether or not the front collision is at least partially caused by a previous rear collision.

Consequently, for a frontal collision after a rear collision, it may be necessary to deploy an airbag (not shown) in situations, where it would not be necessary for a frontal collision without having a preceding rear collision, in order to reduce or prevent the risk of injury to the occupant 102, e.g., by impacting the interior 106 of the vehicle 100.

Therefore, an airbag activation device 108, as schematically and exemplarily shown in Figure 3, is configured to activate the deployment of an airbag (not shown) in accordance with the collision situation that means dependent on the collision being a single collision or a queue collision. The airbag activation device 108 comprises at least a rear collision sensing unit 110, a front collision sensing unit 112, and a control unit 114. The rear collision sensing unit 110 is configured to detect a rear collision and to transmit a signal S1 indicating the rear collision to the control unit 114. The front collision sensing unit 112 is configured to detect a front collision and to transmit a signal S2 indicating the front collision to the control unit 114.

The control unit 114 is configured to adapt a threshold for activating an airbag deployment according to at least one activation parameter, based on the signals s1, s2 received from the rear collision sensing unit and the front collision sensing unit. Further, the control unit 114 may be configured to activate a delay timer (not shown), which is configured to activate an airbag deployment after a predetermine amount of time after the rear collision happened.

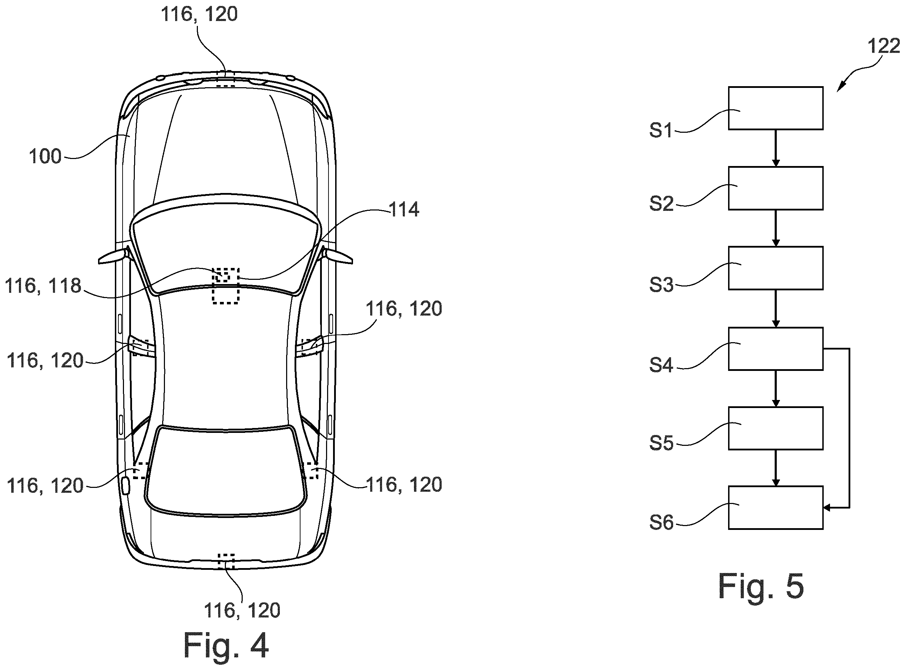

In Figure 4, showing a schematic view of an exemplary vehicle 100 having the airbag activation device 108, the control unit 114 is located substantially in a center of the vehicle 100 regarding a vehicle's width, e.g., in a center console of the vehicle 100. The control unit 114 comprises at least one sensor 116, being integrated in the control unit 114, and therefore a so-called on-board sensor 118. Further, Figure 4 shows some exemplary but non-limiting number and locations for additional sensors 116 in the vehicle 100, which are located outside from the control unit 114. Those sensors 116 are so-called satellite or external sensors 120. The sensors 116 are part of the rear collision sensing unit 110 and/or the front collision sensing unit 114. The at least one on-board sensor 118 may be a acceleration sensor, and the satellite sensors 120 may be acceleration sensors, deformation sensors, or the like.

The sensors 116 allow detecting a rear collision and/or a front collision, wherein a combined use of on-board sensors 118 and satellite sensors 120 may provide a higher accuracy in determining a direction, a severity, and the like, of the rear collision and/or the front collision.

For controlling the airbag activation device 108, a method 122 (see Figure 5) is used, which may be performed by the control unit 114 of the airbag activation device 108. Additionally, or alternatively, the method may be performed at least partially by another control unit or CPU (not shown) of the vehicle 100, being configured to communicate with the airbag activation device 108, and particularly with the control unit 114.

The exemplary method 122 for controlling the airbag activation device 108 as shown in Figure 5 comprises the following steps, but not necessarily in this order:
step S1: detecting, by the rear collision sensing unit 110, a rear collision;
step S2: transmitting, from the rear collision sensing unit 110, the signal s1 indicating the rear collision to the control unit 114,
step S3: detecting, by the front collision sensing unit 112, a front collision;
step S4: transmitting, from the front collision sensing unit 112, the signal s2 indicating the front collision to the control unit 114;
step S5: adapting, by the control unit 114, based on the signals s1, s2 received from the rear collision sensing unit 110 and the front collision sensing unit 112, a threshold for activating an airbag deployment according to at least one activation parameter, particularly in case that, after the rear collision, a front collision is detected by the front collision sensing unit 112, and/or
step S6: activating, by the control unit 114, a delay timer being configured to activate an airbag deployment after a predetermined amount of time after the rear collision.

Such method 122 allows individually adapting a threshold for activating an airbag deployment dependent on the actual crash situation that is dependent on the crash situation corresponding to an isolated/single crash event or to a queue collision, and/or the actual position of the occupant 102, shortly before the collision happens. Thereby, the method improves protection for the occupant 102 in case of crash/collision. In other words, the method reduces the risk of injury to the occupant 102 in case of crash/collision regardless of whether it is a single collision or a queue collision, and more particularly, regardless of whether or not the occupant 102 is in the normal position before the collision. In case of a queue collision, the method may be performed for the rear collision as well as for the front collision.

While the disclosure has been illustrated and described in detail in the drawings and the description, such illustration and description are to be considered illustrative or exemplary and not restrictive. The disclosure is not limited to the disclosed examples. Other variations to the disclosed examples can be understood and effected by those skilled in the art in practicing the claimed disclosure, from the study of the drawings, the disclosure, and the appended claims.

In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. Any reference signs in the claims should not be construed as limiting the scope of the claims.

### LIST OF REFERENCE SIGNS

- 100: vehicle
- 100B: vehicle behind
- 100F: vehicle in front
- 100M: middle vehicle
- 102: occupant
- 104: seat
- 106: interior
- 108: airbag activation device
- 110: rear collision sensing unit
- 112: front collision sensing unit
- 114: control unit
- 116: sensor
- 118: on-board sensor
- 120: satellite sensor
- 122: method

- s1, s2: signal

## Claims

1. A method (122) for controlling an airbag activation device (108) in a vehicle (100), the method (122) comprising:
detecting, by at rear collision sensing unit (110), a rear collision;
transmitting, from the rear collision sensing unit (110), a signal (s1) indicating the rear collision, to a control unit (114),
detecting, by a front collision sensing unit (112), a front collision;
transmitting, from the front collision sensing unit (112), a signal (s2) indicating the front collision, to the control unit (114);
adapting, by the control unit (114), based on the signals (s1, s2) received from rear collision sensing unit (110) and the front collision sensing unit (112), a threshold for activating an airbag deployment according to at least one activation parameter, and/or
activating, by the control unit (114), a delay timer being configured to activate an airbag deployment after a predetermined amount of time after the rear collision.

2. The method (122) according to claim 1, further comprising:
deactivating, by the control unit (114), based on the signals (s1; s2) received from the rear collision sensing unit (110) and/or the front collision sensing unit (112), a knee airbag activation.

3. The method (122) according to claim 1 or 2, the at least one activation parameter being a value corresponding to a severity of the rear collision.

4. The method (122) according to any of claims 1 to 3, the at least one activation parameter being related to a size and/or a pre-collision position of an occupant (102).

5. The method (122) according to claim 4, the size and/or the pre-collision position of the occupant (102) being detected from at least one interior sensor and/or from seat sensors.

6. The method (122) according to any of claims 1 to 5, the at least one activation parameter being based on a prediction model of an occupants' future position being calculated before and/or during and/or after the rear collision.

7. The method (122) according to any of claims 1 to 6, the at least one activation parameter being based on a real time tracking of an occupant (102).

8. The method (122) according to claim 7, the real time tracking of the occupant (102) being performed by at least one interior sensor.

9. An airbag activation device (108) for a vehicle (100), the device (108) comprising:
a rear collision sensing unit (110) configured to detect a rear collision;
a front collision sensing unit (112) configured to detect a front collision; and
a control unit (114);
the rear collision sensing unit (110) further being configured to transmit a signal (s1) indicating the rear collision, to the control unit (114);
the front collision sensing unit (112) further being configured to transmit a signal (s2) indicating the front collision, to the control unit (114);
the control unit (114) being configured to adapt a threshold for activating an airbag deployment according to at least one activation parameter based on the signals (s1, s2) received from the rear collision sensing unit (110) and the front collision sensing unit (112), and/or
the control unit (114) being configured to activate a delay timer, which is configured to activate an airbag deployment after a predetermined amount of time after the rear collision.

10. The device (108) according to claim 9, the rear collision sensing unit (110) comprising at least one vehicle sensor (116) being an on-board sensor (118) or a satellite sensor (120) and/or the front collision sensing unit (112) comprising at least one vehicle sensor (116) being an on-board sensor (118) or a satellite sensor (120).

11. The device (108) according to claim 9, the rear collision sensing unit (110) comprising multiple vehicle sensors (116) and/or the front collision sensing unit (112) comprising multiple vehicle sensors (116).

12. The device (108) according to claim 10 or 11, the vehicle sensor/s (116) being an acceleration sensor and/or an SRS sensor and/or a deformation sensor.

13. The device (108) according to any of claims 9 to 12, the rear collision sensing unit (110) corresponding at least partially to the front collision sensing unit (112).

14. The device (108) according to any of claims 9 to 13, the control unit (114) being configured to determine the at least one activation parameter and/or activate the delay timer based on a severity of the rear collision and/or based on a size and/or pre-collision position of an occupant (102) and/or based on a prediction model calculated during the rear collision and/or based on a real time tracking of the occupant (102).

15. The device (108) according to any of claims 9 to 14, further comprising at least one interior sensor configured to monitor a passenger compartment in the vehicle (100) and/or seat sensors being positioned inside a passenger seat (104) and configured to detect an occupant (102).

## Patentansprüche

1. Verfahren (122) zum Steuern einer Airbag Auslösevorrichtung (108) in einem Fahrzeug (100), wobei das Verfahren (122) Folgendes umfasst:
Erkennen eines Heckaufpralls durch eine Heckaufprallsensoreinheit (110);
Übertragen eines Signals (s1), das den Heckaufprall anzeigt, von der Heckaufprallsensoreinheit (110) an eine Steuereinheit (114),
Erkennen eines Frontalaufpralls durch eine Frontalaufprallsensoreinheit (112);
Übertragen eines Signals (s2), das den Frontalaufprall anzeigt, von der Frontalaufprallsensoreinheit (112) an die Steuereinheit (114);
Anpassen, durch die Steuereinheit (114), auf Basis der von der Heckaufprallsensoreinheit (110) und der Frontalaufprallsensoreinheit (112) empfangenen Signale (s1, s2), eines Schwellwerts zur Auslösung einer Airbagauslösung gemäß mindestens einem Auslöseparameter und/oder
Aktivieren, durch die Steuereinheit (114), eines Verzögerungstimers, der so konfiguriert ist, dass er eine Airbagauslösung nach einer vorbestimmten Zeitspanne nach dem Heckaufprall aktiviert.

2. Verfahren (122) nach Anspruch 1, weiterhin umfassend: Deaktivieren, durch die Steuereinheit (114), basierend auf den von der Heckaufprallsensoreinheit (110) und/oder der Frontalaufprallsensoreinheit (112) empfangenen Signalen (s1; s2), einer Knieairbag-Auslösung.

3. Verfahren (122) nach Anspruch 1 oder 2, wobei der mindestens eine Auslöseparameter ein Wert ist, der einer Schwere des Heckaufpralls entspricht.

4. Verfahren (122) nach einem der Ansprüche 1 bis 3, wobei der mindestens eine Auslöseparameter sich auf eine Größe und/oder eine Vorkollisionsposition eines Insassen (102) bezieht.

5. Verfahren (122) nach Anspruch 4, wobei die Größe und/oder die Vorkollisionsposition des Insassen (102) von mindestens einem Innenraumsensor und/oder von Sitzsensoren erfasst wird.

6. Verfahren (122) nach einem der Ansprüche 1 bis 5, wobei der mindestens eine Auslöseparameter auf einem Vorhersagemodell einer zukünftigen Position eines Insassen basiert, das vor und/oder während und/oder nach dem Heckaufprall berechnet wird.

7. Verfahren (122) nach einem der Ansprüche 1 bis 6, wobei der mindestens eine Auslöseparameter auf einer Echtzeitverfolgung eines Insassen (102) basiert.

8. Verfahren (122) nach Anspruch 7, wobei die Echtzeitverfolgung des Insassen (102) durch mindestens einen Innenraumsensor durchgeführt wird.

9. Airbag Auslösevorrichtung (108) für ein Fahrzeug (100), wobei die Vorrichtung (108) umfasst:
eine Heckaufprallsensoreinheit (110), die dazu konfiguriert ist, einen Heckaufprall zu erkennen; eine Frontalaufprallsensoreinheit (112), die dazu konfiguriert ist, einen Frontalaufprall zu erkennen; und eine Steuereinheit (114); wobei die Heckaufprallsensoreinheit (110) ferner dazu konfiguriert ist, ein Signal (s1), das den Heckaufprall anzeigt, an die Steuereinheit (114) zu übertragen; wobei die Frontalaufprallsensoreinheit (112) ferner dazu konfiguriert ist, ein Signal (s2), das den Frontalaufprall anzeigt, an die Steuereinheit (114) zu übertragen; wobei die Steuereinheit (114) dazu konfiguriert ist, einen Schwellwert zur Auslösung einer Airbagauslösung gemäß mindestens einem Auslöseparameter auf Basis der von der Heckaufprallsensoreinheit (110) und der Frontalaufprallsensoreinheit (112) empfangenen Signale (s1, s2) anzupassen und/oder wobei die Steuereinheit (114) dazu konfiguriert ist, einen Verzögerungstimer zu aktivieren, der so konfiguriert ist, dass er eine Airbagauslösung nach einer vorbestimmten Zeitspanne nach dem Heckaufprall aktiviert.

10. Vorrichtung (108) nach Anspruch 9, wobei die Heckaufprallsensoreinheit (110) mindestens einen Fahrzeugsensor (116) umfasst, der ein bordeigener Sensor (118) oder ein Satellitensensor (120) ist, und/oder wobei die Frontalaufprallsensoreinheit (112) mindestens einen Fahrzeugsensor (116) umfasst, der ein bordeigener Sensor (118) oder ein Satellitensensor (120) ist.

11. Vorrichtung (108) nach Anspruch 9, wobei die Heckaufprallsensoreinheit (110) mehrere Fahrzeugsensoren (116) umfasst und/oder wobei die Frontalaufprallsensoreinheit (112) mehrere Fahrzeugsensoren (116) umfasst.

12. Vorrichtung (108) nach Anspruch 10 oder 11, wobei der/die Fahrzeugsensor(en) (116) ein Beschleunigungssensor und/oder ein SRS-Sensor und/oder ein Deformationssensor ist/sind.

13. Vorrichtung (108) nach einem der Ansprüche 9 bis 12, wobei die Heckaufprallsensoreinheit (110) zumindest teilweise der Frontalaufprallsensoreinheit (112) entspricht.

14. Vorrichtung (108) nach einem der Ansprüche 9 bis 13, wobei die Steuereinheit (114) dazu konfiguriert ist, den mindestens einen Auslöseparameter und/oder den Verzögerungstimer basierend auf einer Schwere des Heckaufpralls und/oder basierend auf einer Größe und/oder einer Vorkollisionsposition eines Insassen (102) und/oder basierend auf einem während des Heckaufpralls berechneten Vorhersagemodell und/oder basierend auf einer Echtzeitverfolgung des Insassen (102) zu bestimmen und/oder zu aktivieren.

15. Vorrichtung (108) nach einem der Ansprüche 9 bis 14, ferner umfassend mindestens einen Innenraumsensor, der dazu konfiguriert ist, einen Fahrzeuginnenraum im Fahrzeug (100) zu überwachen, und/oder Sitzsensoren, die in einem Fahrgastsitz (104) angeordnet und dazu konfiguriert sind, einen Insassen (102) zu erfassen.

## Revendications

1. Procédé (122) pour commander un dispositif d'activation d'airbag (108) dans un véhicule (100), le procédé (122) consistant à :
détecter, par une unité de détection de collision arrière (110), une collision arrière ;
transmettre, à partir de l'unité de détection de collision arrière (110), un signal (s1) indiquant la collision arrière à une unité de commande (114) ;
détecter, par une unité de détection de collision avant (112), une collision avant ;
transmettre, à partir de l'unité de détection de collision avant (112), un signal (s2) indiquant la collision avant à l'unité de commande (114) ;
adapter, par l'unité de commande (114), sur la base des signaux (s1, s2) reçus à partir de l'unité de détection de collision arrière (110) et de l'unité de détection de collision avant (112), un seuil pour activer un déploiement d'airbag selon au moins un paramètre d'activation, et/ou
activer, par l'unité de commande (114), un temporisateur configuré pour activer un déploiement d'airbag après un laps de temps prédéterminé après la collision arrière.

2. Procédé (122) selon la revendication 1, consistant en outre à :
désactiver, par l'unité de commande (114), sur la base des signaux (s1, s2) reçus à partir de l'unité de détection de collision arrière (110) et/ou de l'unité de détection de collision avant (112), une activation d'airbag de genoux.

3. Procédé (122) selon la revendication 1 ou 2, ledit au moins un paramètre d'activation étant une valeur correspondant à une sévérité de la collision arrière.

4. Procédé (122) selon l'une quelconque des revendications 1 à 3, ledit au moins un paramètre d'activation étant lié à une taille et/ou à une position avant collision d'un occupant (102).

5. Procédé (122) selon la revendication 4, la taille et/ou la position avant collision de l'occupant (102) étant détectées par au moins un capteur intérieur et/ou par des capteurs de siège.

6. Procédé (122) selon l'une quelconque des revendications 1 à 5, ledit au moins un paramètre d'activation étant basé sur un modèle de prédiction de la position future d'un occupant calculé avant et/ou pendant et/ou après la collision arrière.

7. Procédé (122) selon l'une quelconque des revendications 1 à 6, ledit au moins un paramètre d'activation étant basé sur un suivi en temps réel d'un occupant (102).

8. Procédé (122) selon la revendication 7, le suivi en temps réel de l'occupant (102) étant effectué par au moins un capteur intérieur.

9. Dispositif d'activation d'airbag (108) pour un véhicule (100), le dispositif (108) comprenant :
une unité de détection de collision arrière (110) configurée pour détecter une collision arrière ;
une unité de détection de collision avant (112) configurée pour détecter une collision avant ; et
une unité de commande (114) ;
l'unité de détection de collision arrière (110) étant en outre configurée pour transmettre un signal (s1) indiquant la collision arrière à l'unité de commande (114) ;
l'unité de détection de collision avant (112) étant en outre configurée pour transmettre un signal (s2) indiquant la collision avant à l'unité de commande (114) ;
l'unité de commande (114) étant configurée pour adapter un seuil pour activer un déploiement d'airbag en fonction d'au moins un paramètre d'activation basé sur les signaux (s1, s2) reçus à partir de l'unité de détection de collision arrière (110) et de l'unité de détection de collision avant (112), et/ou
l'unité de commande (114) étant configurée pour activer un temporisateur qui est configuré pour activer un déploiement d'airbag après un laps de temps prédéterminé après la collision arrière.

10. Dispositif (108) selon la revendication 9, l'unité de détection de collision arrière (110) comprenant au moins un capteur de véhicule (116) qui est un capteur embarqué (118) ou un capteur satellite (120) et/ou l'unité de détection de collision avant (112) comprenant au moins un capteur de véhicule (116) qui est un capteur embarqué (118) ou un capteur satellite (120).

11. Dispositif (108) selon la revendication 9, l'unité de détection de collision arrière (110) comprenant plusieurs capteurs de véhicule (116) et/ou l'unité de détection de collision avant (112) comprenant plusieurs capteurs de véhicule (116).

12. Dispositif (108) selon la revendication 10 ou 11, le ou les capteur(s) de véhicule (116) étant un capteur d'accélération et/ou un capteur SRS et/ou un capteur de déformation.

13. Dispositif (108) selon l'une quelconque des revendications 9 à 12, l'unité de détection de collision arrière (110) correspondant au moins partiellement à l'unité de détection de collision avant (112).

14. Dispositif (108) selon l'une quelconque des revendications 9 à 13, l'unité de commande (114) étant configurée pour déterminer ledit au moins un paramètre d'activation et/ou activer le temporisateur sur la base d'une sévérité de la collision arrière et/ou sur la base d'une taille et/ou d'une position avant collision d'un occupant (102) et/ou sur la base d'un modèle de prédiction calculé pendant la collision arrière et/ou sur la base d'un suivi en temps réel de l'occupant (102).

15. Dispositif (108) selon l'une quelconque des revendications 9 à 14, comprenant en outre au moins un capteur intérieur configuré pour surveiller un habitacle dans le véhicule (100) et/ou des capteurs de siège positionnés à l'intérieur d'un siège passager (104) et configurés pour détecter un occupant (102).
